# NEUE EUROPÄISCHE PATENTSCHRIFT

(11) **EP 3 698 031 B2**
(45) Veröffentlichungstag und Bekanntmachung des Hinweises auf die Entscheidung über den Einspruch: **15.10.2025**
(45) Hinweis auf die Patenterteilung: 07.07.2021
(21) Anmeldenummer: 19704203.9
(22) Anmeldetag: 22.01.2019
(51) Int. Cl.: F02C 9/26, F23R 3/34, F23N 1/00, F02C 7/228, F23C 6/02

(54) **VERFAHREN ZUM BETREIBEN EINER BRENNERANORDNUNG, BEVORZUGTERWEISE EINER GASTURBINE**
METHOD FOR OPERATING A BURNER ASSEMBLY, PREFERABLY OF A GAS TURBINE
PROCÉDÉ DE FONCTIONNEMENT D'UN ARRANGEMENT DES BRÛLEURS, DE PRÉFÉRENCE D'UNE TURBINE À GAZ

(30) Priorität: 13.02.2018 DE 102018202177; 27.04.2018 EP 18169890
(43) Veröffentlichungstag der Anmeldung: 26.08.2020
(73) Patentinhaber: Siemens Energy Global GmbH & Co. KG, 81739 München (DE)
(72) Erfinder: SCHMITZ, Udo, 45470 Mülheim an der Ruhr (DE); SEILER, Carsten, 45665 Recklinghausen (DE); WYHNALEK, Stefan, 47051 Duisburg (DE)
(86) Internationale Anmeldenummer: PCT/EP2019/051492
(87) Internationale Veröffentlichungsnummer: WO 2019/158323

(56) Entgegenhaltungen:
- WO-A1-2015/112515
- US-A1- 2004 255 594
- US-A1- 2014 123 651

## Beschreibung

Die Erfindung betrifft ein Verfahren zum Betreiben einer Brenneranordnung einer Wärmekraftmaschine, insbesondere einer Gasturbine, mit mehreren Brennern, umfassend jeweils mindestens einen Pilotbrenner und mindestens einen Hauptbrenner.

Die Mehrfachanordnung von Brennern erzielt bei hohen Gasturbinen-Leistungen ein relativ homogenes Temperaturprofil, welches den Stickoxidausstoß minimiert. Das ist bei hohen Maschinenleistungen aus ökologischen Gesichtspunkten wichtig, weil heiße Strähnen mit kleinen Luftzahlen den Stickoxidausstoß (NOx) erhöhen.

Bei niedrigen Gasturbinen-Leistungen wird die Brennstoffmenge stark reduziert und die Brenner werden auf Grund der veränderten Brennstoff-/Luftmischung mit kälteren Flammen betrieben. Dieser Effekt führt zu einem schlechten Brennstoffausbrand und hohen Kohlenmonoxid (CO) Emissionen im Abgas.

Aktuell wird das Problem der hohen Luftzahlen und vergleichsweise kleinen Verbrennungstemperaturen gelöst, indem die an der Verbrennung beteiligte Luftmenge in der gesamten Brennkammer reduziert wird. Die Schwierigkeit dabei ist, dass die Luftmenge nicht beliebig reduziert werden kann, damit eine kritische Luftzahl, die zu hohen CO-Emissionen und einem schlechten Brennstoffausbrand führt, nicht überschritten wird. Als Folge steigen die Emissionen bei tiefer Leistungsabgabe oder die minimale Leistungsabgabe wird über die zulässigen Emissionen begrenzt.

Aus der US 2014/0123651 A1 geht ein Verfahren hervor, bei dem die Emissionen bei der Verbrennung in einer Gasturbine erfasst werden und basierend auf den Messwerten die Brennstoffmenge zu einzelnen Stufen eines mehrstufigen Brenners neu eingestellt wird, damit die Emissionswerte der Brenner angepasst werden.

Sowohl die US 2014/123651 A1 als auch die weiteren Publikationen US 2004/255594 A1 und WO 2015/112515 A1 zeigen die im allgemeinen Teil von Anspruch 1 spezifizierten Merkmale.

Der Erfindung liegt die Aufgabe zugrunde, eine in Bezug auf die CO-Emissionen verbesserte Betriebsweise einer Brenneranordnung einer Wärmekraftmaschine, insbesondere einer Gasturbine, die bei einer niedrigen Leistungsabgabe betrieben wird, vorzuschlagen.

Die Aufgabe wird erfindungsgemäß durch ein Verfahren gemäß Anspruch 1 gelöst.

Unter "lastabhängig" wird hierbei verstanden, dass die Gesamtmenge an Brennstoff für eine vorgegebene bzw. eingestellte Last die gleiche bleibt. Unter "lastabhängig" wird insbesondere jegliche Last ab Erreichen der nominalen Drehzahl der Wärmekraftmaschine verstanden. Bei einer Veränderung der Last ist ggf. eine andere Gesamtmenge an Brennstoff erforderlich. Die neue Gesamtmenge wird ebenfalls im Rahmen der technisch möglichen Toleranzen konstant gehalten, solange die Last sich nicht ändert. Leichte Abweichungen vom konstanten Massenstrom sind in der Regel nur bei einem Verbessern des Ausbrandes vorgesehen, d.h. dass eine Verringerung der CO-Emissionen bzw. ein weiterer Ausbrand zu einer kleineren Brennstoffmenge bei konstanter Leistung führen kann. Der voreingestellte Betrieb der Wärmekraftmaschine kann z.B. der Standardbetrieb sein, bei dem alle Pilotbrenner und alle Hauptbrenner mit Brennstoff versorgt werden, das erfindungsgemäße Verfahren ist jedoch nicht nur auf diesen Ausgangszustand eingeschränkt.

"Mehrere Brenner" bedeutet hierbei, dass zumindest zwei Brenner vorgesehen sind, bevorzugt ist jedoch eine Vielzahl von Brennern gemeint. Die Brenner umfassen jeweils einen oder mehrere Pilotbrenner und einen oder mehrere Hauptbrenner. Die Hauptbrenner können als Vormischbrenner ausgeführt sein, dabei werden der Brennstoff und die Verbrennungsluft stromauf der Brennerflamme gemischt. Die Pilotbrenner können sowohl als Vormischbrenner als auch als Diffusionsbrenner und als Kombination ausgeführt sein. Die Pilotbrenner dienen neben dem Anfahren der Gasturbine auch der Verbrennungsstabilisierung, insbesondere der Vormischflamme, im Teil- und Volllastbetrieb.

Unter "Unterbrechung der Brennstoffversorgung zu den Hauptbrennern der zweiten Gruppe" ist hierbei zu verstehen, dass die Brennstoffzufuhr auf null gesetzt wird. Dies erfolgt z.B. durch eine Absperrvorrichtung in der entsprechenden Brennstoffleitung. Insbesondere findet lediglich eine Reduzierung bzw. Variierung der Brennstoffstoffzufuhr zu den Hauptbrennern der zweiten Gruppe nicht statt.

Bei der Umverteilung des Brennstoffs handelt es sich insbesondere um eine gleichmäßige Umverteilung, bei der jedem der noch aktiven Hauptbrenner der gleiche Anteil an der übrigen Brennstoffmenge zugeführt wird.

Die Erfindung basiert auf der Idee, durch eine geeignete Verteilung des Brennstoffs zu den einzelnen Brennern die CO-Emissionen, insbesondere bei niedriger Leistungsabgabe der Wärmekraftmaschine, zu reduzieren und gleichzeitig den Gesamtbrennstoffausbrand zu verbessern. Je nach Betriebsweise der Brenner werden diese in mindestens zwei Gruppen unterteilt, wobei eine Gruppe sowohl eine Vielzahl von Brennern als auch einen einzigen Brenner umfassen kann.

Die erfindungsgemäße Betriebsweise der Brenneranordnung basiert auf folgenden Merkmalen:
Bei den Brennern der ersten Gruppe werden sowohl die Pilotbrenner als auch die Hauptbrenner mit Brennstoff versorgt.

Die Brenner der ersten Gruppe werden weiterhin auch als "heiße" Brenner bezeichnet.

Bei mindestens einem Brenner wird die Brennstoffversorgung des Hauptbrenners unterbrochen, was beispielsweise mithilfe von Absperrvorrichtung in den Versorgungsleitungen erfolgt. Dieser eine Brenner oder diese mehreren Brenner bilden die zweite Gruppe. Die Pilotbrenner der zweiten Gruppe bleiben in Betrieb. Die Brenner der zweiten Gruppe werden im Folgenden als "warme" Brenner bezeichnet. Der durch das Abschalten der Hauptbrenner der zweiten Gruppe übrige Brennstoff wird auf die Hauptbrenner der ersten Gruppe (die "heißen" Brenner), deren Versorgung nicht unterbrochen wurde, umverteilt. Das führt vorteilhafterweise zum Betrieb der "heißen" Brenner bei einer kleineren Luftzahl und einer höheren Verbrennungstemperatur und somit zu einem geringeren CO-Ausstoß.

Dabei wird nicht die Gesamtluftmenge des Verdichters und die Luftmenge der gesamten Brennkammer angepasst, um die optimale Luftzahl über die Brenner zu erreichen, sondern erfindungsgemäß kommt es maschinenlastabhängig zu einer gezielten lokalen Umverteilung der Brennstoffmenge mit Hilfe der speziellen Betriebsweise der Brenner. Diese Betriebsweise erlaubt insbesondere im niedrigen Leistungsbereich eine zusätzliche emissionskonforme Reduktion der Leistungsabgabe bzw. eine Reduktion der Emissionen bei konstanter Leistung.

Gemäß der Erfindung wird bei einer dritten Gruppe von Brennern die Brenn-stoffversorgung sowohl zu den Hauptbrennern als auch zu den Pilotbrennern unterbrochen und die übrige Brennstoffmenge wird auf die noch aktiven Hauptbrenner der ersten Gruppe umverteilt. Diese Brenner werden im Fol-genden als "kalte" Brenner bezeichnet. Brenner, bei de-nen die Brennstoffversorgung sowohl zu den Hauptbren-nern als auch zu den Pilotbrennern unterbrochen wird, emittieren keine Emissionen. Der übrige Brennstoff wird auf die anderen Hauptbrenner umverteilt, deren Versor-gung nicht unterbrochen wurde.

Bei niedrigen Maschinenleistungen ist es somit möglich, entsprechend Brenner im optimalen Luftzahlbereich mit niedrigen CO-Emissionen zu betreiben ("heiße" Brenner). Im Bereich der "kalten" Brenner entstehen keine CO-Emissionen, da diese nicht mit Brennstoff versorgt werden. Die "warmen" Brenner schirmen dabei den "heißen" Bereich in der Brenneranordnung vom "kalten" Bereich der Brenneranordnung ab.

Im Hinblick auf einen sicheren und störungsfreien Betrieb der Brenneranordnung gehören vorzugsweise maximal 30% der Brenner zu der dritten Gruppe. Die dritte Gruppe kann jedoch auch 0 Brenner umfassen, d.h. auf die "kalten" Brenner wird verzichtet. Vorteilhafterweise gehören maximal 40% der Brenner zur zweiten Gruppe.

Gemäß der Erfindung werden die Pilotbrenner der Brenner der zweiten Gruppe mit einer kleineren Luftzahl betrieben als die Pilotbrenner der ersten Gruppe. Hierzu ist der Einbau von zusätzlichen Leitungskomponenten und Armaturen erforderlich, die insbesondere Regelventile in den Leitungen zu den Pilotbrennern zumindest der zweiten Gruppe umfassen. Auch hier gilt, dass die Verbrennung mit einer kleineren Luftzahl eine hohe Verbrennungstemperatur und somit einen niedrigeren CO-Ausstoß zur Folge hat.

Vorteilhafterweise wird die Anzahl der Brenner mit zumindest teilweise unterbrochener Brennstoffversorgung variiert, insbesondere in Abhängigkeit von der Leistung der Wärmekraftmaschine. Dies bedeutet, dass über einen Zeitraum, in dem die Leistungsabgabe unverändert ist, die Gesamtmenge an Brennstoff näherungsweise konstant bleibt, jedoch der Brennstoff im Hinblick auf einen optimalen Betrieb der Wärmekraftmaschine hinsichtlich CO-Emissionen auf die aktiven Brenner umverteilt wird.

Zudem kann in einem weiteren Zeitraum, bei einer Änderung der Last bzw. der Leistungsabgabe, erneut eine Umverteilung des Brennstoffs vorgenommen werden. Dabei wird die Anzahl der "heißen", "warmen" und "kalten" Brenner in Abhängigkeit der Leistungsabgabe variiert, um an den "heißen" Brennern immer den optimalen Luftzahlbereich für Emissionen und Hardware (nicht zu heiß und nicht zu kalt) einzustellen. Bevorzugt wird dabei die Anzahl der "warmen" und "heißen" Brenner zu kleinen Leistungen hin reduziert.

Im Hinblick auf niedrige NOx Emissionen werden die Hauptbrenner vorzugsweise im Vormischbetrieb betrieben. Zweckdienlicherweise wird das oben beschriebene Verfahren bei einer Leistungsabgabe unterhalb der Nennleistung der Wärmekraftmaschine angewendet, z.B. beim Anfahren der Wärmekraftmaschine.

Das erfindungsgemäße Verfahren kann mit anderen Maßnahmen kombiniert werden, um die Emissionen bei niedriger Leistungsabgabe zu reduzieren. Solche Maßnahmen zum Reduzieren der Luftmenge in der Brennkammer sind beispielsweise Reduktion der Gesamtluftmenge z.B. durch weitere Androsselung des Verdichters oder Luftbypass und Re-Design der Pilot-/Hauptbrenner.

Nicht erfindungsgemäß ist ein Verbrennungssystem für eine Wärmekraftmaschine, umfassend eine Brenneranordnung mit mehreren Brennern, die jeweils mindestens einen Pilotbrenner und mindestens einen Hauptbrenner aufweisen, ein Hilfssystem zur Versorgung der Brenner mit Brennstoff sowie eine Steuerung.

Erfindungsgemäß ist bevorzugterweise zwischen einem Brenner der ersten Gruppe und einem Brenner der dritten Gruppe zumindest ein Brenner der zweiten Gruppe angeordnet. Die Brenner der zweiten Gruppe dienen dabei primär zum Abschirmen der Brenner der ersten und der dritten Gruppe voneinander. Wird ein "heißer" Brenner durch mindestens einen daneben liegenden "warmen" Brenner abgeschirmt, kann der benachbarte Brenner "kalt" betrieben werden.

Nach einer Ausgestaltung umfasst die Brenneranordnung getrennte Brennstoffleitungen zu den Pilotbrennern und Hauptbrennern, wobei zumindest in den Brennstoffleitungen zu den Hauptbrennern der zweiten Gruppe und der dritten Gruppe Absperrvorrichtungen eingebaut sind.

Vorzugsweise sind die Hauptbrenner als Vormischbrenner ausgeführt.

Nach einer weiteren Ausgestaltung umfasst das Hilfssystem ein erstes Subsystem und ein zweites Subsystem, wobei das erste Subsystem zur Versorgung der Hauptbrenner und der Pilotbrenner der ersten Gruppe eingerichtet ist und das zweite Subsystem zur Versorgung der Pilotbrenner der zweiten Gruppe eingerichtet ist. Hierbei ist vorgesehen, dass die Brennstoffzufuhr durch das erste Subsystem an die Pilotbrenner der ersten Gruppe genau um die Menge an Brennstoff reduziert wird, welche durch das zweite Subsystem den Pilotbrennern der zweiten Gruppe zugeführt wird, wodurch ein konstanter Gesamtmassenstrom an Brennstoff innerhalb des Hilfssystems gewährleistet ist.

Zweckdienlicherweise ist die Brenneranordnung als Ringbrennkammer ausgebildet.

Nicht erfindungsgemäß ist eine Wärmekraftmaschine, insbesondere Gasturbine, mit einem oben beschriebenen Verbrennungssystem.

Ausführungsbeispiele der Erfindung werden anhand einer Zeichnung erläutert. Hierin zeigen die ein-zelnen Figuren:
- FIG 1: einen Schnitt durch einen Brenner umfassend einen Pilotbrenner und einen Hauptbrenner,
- FIG 2: schematisch eine ringförmige Brenneranordnung mit einer ersten Konstellation von in zwei Gruppen unterteilten Brennern, die nicht zur Erfindung gehört,
- FIG 3: schematisch die ringförmige Brenneranordnung gemäß FIG 1 mit einer zweiten Konstellation von in drei Gruppen unterteilten Brennern, und
- FIG 4: ein Hilfssystem für die Brennstoffversorgung einer Brenneranordnung.

Gleiche Bezugszeichen haben in den Figuren die gleiche Bedeutung.

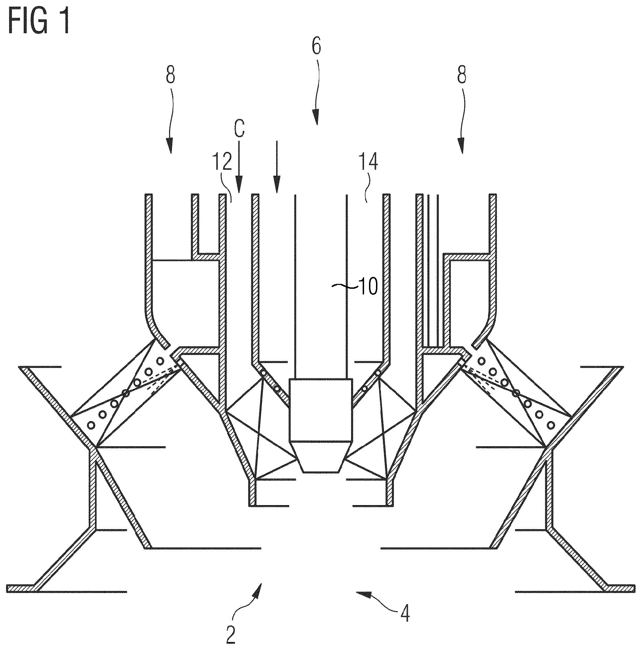

Figur 1 zeigt einen Brenner 2, der in Verbindung mit mehreren gleichartigen Brennern, beispielsweise in der Brennkammer 4 einer nicht näher gezeigten Gasturbinenanlage eingesetzt wird.

Der Brenner 2 besteht aus einem inneren Teil, dem Pilotbrenner 6 und einem konzentrisch dazu liegenden äußeren Teil, dem Hauptbrennersystem oder Hauptbrenner 8. Der Pilotbrenner 6 sowie der Hauptbrenner 8 sind für einen Betrieb mit gasförmigen und/oder flüssigen Brennstoffen in beliebiger Kombination geeignet.

Der Pilotbrenner 6 umfasst einen konzentrisch um einen Kanal 10 herum angeordneten inneren Gaszufuhrkanal 14 (Medium B). Dieser wiederum ist umgeben von einem konzentrisch um die Achse des Brenners 2 angeordneten inneren Luftzufuhrkanal 12 (Medium C). In oder an dem inneren Luftzufuhrkanal 12 kann ein geeignetes Zündsystem angeordnet sein, für welches viele Ausführungsmöglichkeiten bekannt sind und auf dessen Darstellung hier deshalb verzichtet wurde.

Der Pilotbrenner 6 kann in einer an sich bekannten Weise, d.h. überwiegend als ein Diffusionsbrenner, betrieben werden. Seine Aufgabe besteht darin, den Hauptbrenner 8 in einem stabilen Brennbetrieb aufrecht zu erhalten, da dieser zur Verminderung des Schadstoffausstoßes meistens mit einem Magergemisch betrieben wird.

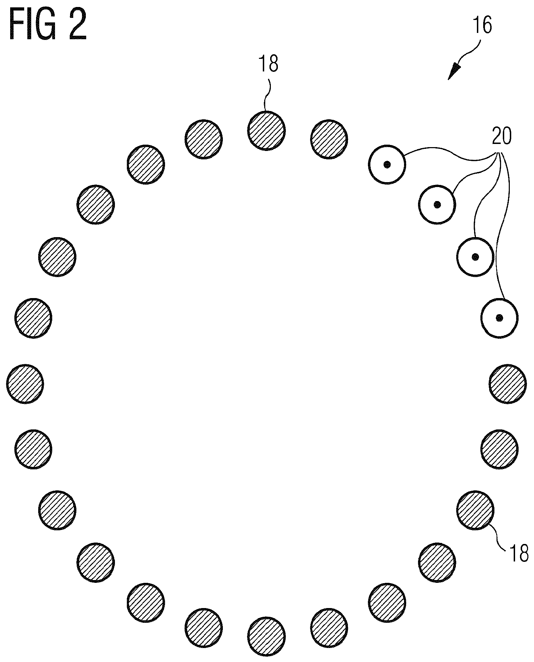

Aus FIG 2 geht eine Brenneranordnung 16 mit einer Mehrzahl von Brennern 2 hervor, die insbesondere Teil einer nicht näher gezeigten Ringbrennkammer einer Gasturbine ist. Die Brenneranordnung 16 umfasst vierundzwanzig Brenner 2. Zwanzig der Brenner, die eine erste Gruppe 18 bilden (dargestellt mit ausgefülltem Kreis), werden als "heiße" Brenner betrieben, d.h. je Brenner 2 werden sowohl der Pilotbrenner 6 als auch der Hauptbrenner 8 mit Brennstoff versorgt. Die weiteren vier Brenner bilden eine zweite Gruppe 20 (dargestellt als Kreis mit Punkt) von "warmen" Brennern 2, bei denen die Brennstoffversorgung zu den Hauptbrennern 8 unterbrochen wird, wobei die Pilotbrenner 6 weiterhin betrieben werden. Hierzu sind in den Leitungen zu den Hauptbrennern 8 Absperrvorrichtungen eingebaut, die innerhalb von wenigen Sekunden, beispielsweise in 2 Sek die Brennstoffzufuhr einstellen. Die durch die Unterbrechung der Brennstoffversorgung zu den Hauptbrennern 8 der zweiten Gruppe 20 übrige Brennstoffmenge wird auf die noch aktiven Hauptbrenner 8 der ersten Gruppe 18 umverteilt. Gleichzeitig wird eine Anpassung der Luftzahl der Pilotbrenner 6 der zweiten Gruppe 20 vorgenommen, indem eine kleinere Luftzahl als die der Pilotbrenner 8 der ersten Gruppe 8 eingestellt wird.

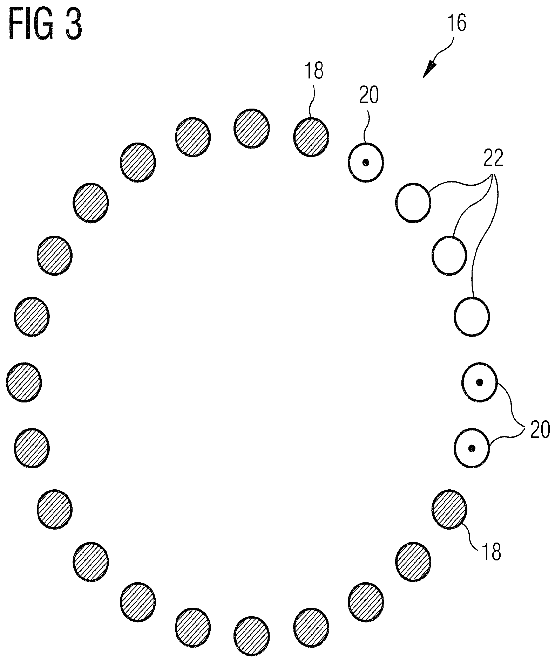

In FIG 3 ist die gleiche Brenneranordnung 16 gezeigt, wobei die Betriebsweise der Brenner 2 eine andere ist. Von den vierundzwanzig Brennern 2 gehören nur achtzehn zur ersten Gruppe 18, drei zu der zweiten Gruppe 20 und drei weitere bilden eine dritte Gruppe 22 von "kalten" Brennern (dargestellt mit Kreis), die komplett von der Brennstoffversorgung abgetrennt sind, so dass weder den Pilotbrennern 6 noch den Hauptbrennern 8 dieser Gruppe 22 Brennstoff zugeführt wird.

Bei dem Übergang von der einen Konstellation zur anderen bleibt die Gesamtmenge an Brennstoff zu der Brenneranordnung 16 lastabhängig stets konstant. Beispielsweise beim Übergang vom Standardbetrieb der Ringbrennkammer mit nur "heißen" Brennern zu einer erfindungsgemäßen Konstellation mit "warmen" und ggf. auch "kalten" Brennern 2 verändert sich die Gesamtmenge an Brennstoff nicht. Der Betrieb mit "warmen" und "kalten" Brennern 2 wird insbesondere bei einer Gasturbinenleistung unterhalb der Nennleistung durchgeführt. Es sind auch weitere Konstellationen mit "heißen", "warmen" und ggf. "kalten" Brennern 2 möglich, beispielsweise können die jeweiligen Gruppen an mehreren Stellen verteilt werden. Wichtig dabei ist jedoch, dass "heiße" Brenner stets durch "warme" Brenner 2 von den "kalten" Brennern 2 abgeschirmt sind, d.h. zwischen einem Brenner 2 der ersten Gruppe 18 und einem Brenner 2 der dritten Gruppe 22 ist zumindest ein Brenner 2 der zweiten Gruppe 20 angeordnet.

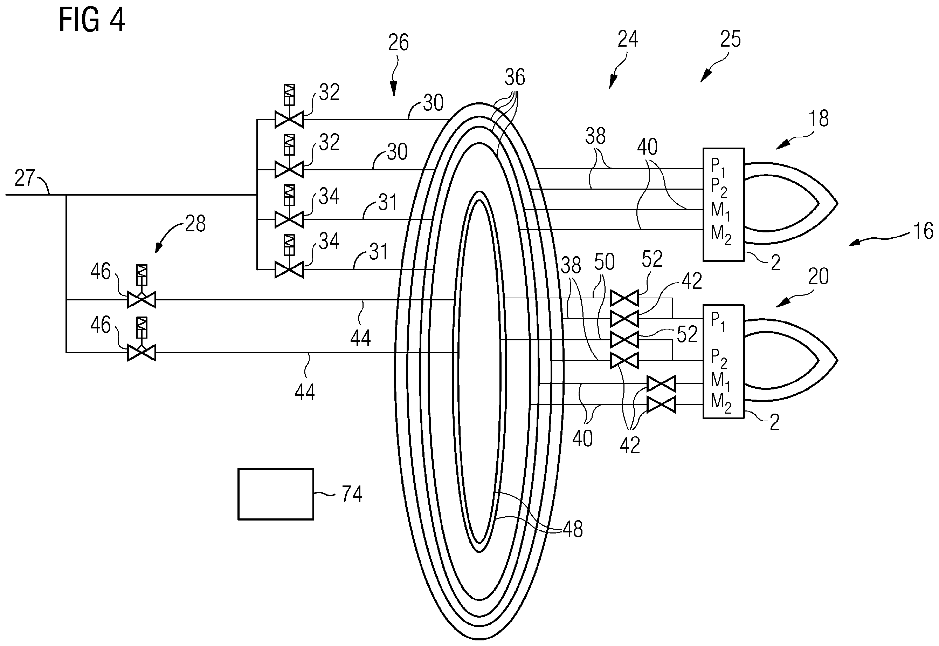

In FIG 4 ist exemplarisch ein Hilfssystem 24 für die Versorgung mit Brennstoff einer Brenneranordnung 16 gezeigt, wobei das Hilfssystem 24 und die Brenneranordnung 16 ein Verbrennungssystem 25 bilden. Zum Hilfssystem 24 gehört eine zentrale Versorungsleitung 27. Die Brenneranordnung 16 umfasst z.B. vierundzwanzig Brenner, die in zwei Gruppen 18, 20 unterteilt sind, welche Gruppen 18, 20 symbolisch durch zwei Brenner 2 in der Figur angedeutet sind.

Die Brenner 2 der ersten Brennergruppe 18 sind dafür ausgelegt als "heiße" Brenner betrieben zu werden und die Brenner 2 der zweiten Gruppe 20 als "warme" Brenner betrieben zu werden. Jeder der Brenner 2 umfasst in der gezeigten Ausführung einen zweistufigen Pilotbrenner, wobei die zwei Stufen mit P₁, P₂ bezeichnet sind. Jeder der Brenner 2 umfasst zudem einen zweistufigen Hauptbrenner, dessen zwei Stufen mit M₁, M₂ bezeichnet sind. Jedoch sind auch andere Konstellationen von ein- oder mehrstufigen Pilot- und/oder Hauptbrennern denkbar.

Die Brennstoffzufuhr zu beiden Brennergruppen 18, 20 erfolgt im gezeigten Ausführungsbeispiel über getrennt geregelte Versorgungen, indem das Hilfssystem 24 in zwei Subsysteme 26, 28 unterteilt ist.

Das erste Subsystem 26 umfasst erste Leitungen 30 für die Pilotbrennerstufen P₁, P₂, sowie zweite Leitungen 31 für die Hauptbrennerstufen M₁, M₂ beider Brennergruppen 18, 20. Die Brennstoffmenge in den ersten und zweiten Leitungen 30, 31 wird über erste Regelorgane 32 bzw. zweite Regelorgane 34 angepasst, wobei die Regelorgane 32, 34 insbesondere als Regelventile ausgestaltet sind. Die Leitungen 30, 31 münden jeweils in eine Ringleitung 36. Von dort aus werden über erste Stichleitungen 38 beide Pilotbrennerstufen P₁, P₂, aller Pilotbrenner und über zweite Stichleitungen 40 beide Hauptbrennerstufen M₁, M₂, aller Hauptbrennern versorgt. In den Stichleitungen 38, 40 der zweiten Brennergruppe 20 sind zudem Absperrventile 42 eingebaut. Das erste Subsystem 26 ist insbesondere für die Versorgung mit Brennstoff aller Brenner 2 der Brenneranordnung 16 im Standortbetrieb vorgesehen.

Das zweite Subsystem 28 ist ähnlich aufgebaut und umfasst dritte Leitungen 44, in welchen Regelorgane 46 eingebaut sind, nachgeschaltete Ringleitungen 48 und weitere Stichleitungen 50 zu den Pilotbrennerstufen P₁, P₂, der zweiten Gruppe 20, wobei in den weiteren Stichleitungen 50 Absperrventile 52 eingebaut sind.

Im Standardbetrieb, bei dem sowohl die Pilotbrenner 6 als auch die Hauptbrenner 8 der Brenner 2 beider Gruppen 18, 20 betrieben werden, sind die Absperrventile 42 des ersten Subsystems 26 geöffnet und die Absperrventile 52 des zweiten Subsystems 28 sind geschlossen. Beim Wechsel zum "heiß"/"warm"-Betrieb werden alle Absperrventile 42 in den Stichleitungen 38 und 40 der zweiten Gruppe 20 geschlossen, jedoch werden die Absperrventile 52 geöffnet, wodurch die Pilotbrenner der zweiten Gruppe 20 über das zweite Subsystem 28 mit Brennstoff versorgt werden.

Da die Absperrventile 42 zu den Hauptbrennern der zweiten Gruppe 20 geschlossen werden, wird der Brennstoff im ersten Subsystem 26 auf die Hauptbrenner der ersten Gruppe 18 umverteilt. Der Massenstrom an Brennstoff zu den Pilotbrennern der ersten Gruppe 18 wird dabei konstant gehalten. Dies erfolgt, indem die Brennstoffmenge zu den Pilotbrennern der ersten Gruppe 18 durch die Regelventile 32 gedrosselt wird, um die nicht mehr erforderliche Brennstoffmenge zu den Pilotbrennern der zweiten Gruppe 20 zu kompensieren. Dabei verringern die Regelventile 32 den Durchfluss in den ersten Leitungen 30 genau um die Menge, die durch das zweite Subsystem 28 den Pilotbrennern der zweiten Gruppe 20 zugeführt wird. Nach erfolgter Umschaltung ist die Brennstoffmenge der Pilotbrenner der zweiten Gruppe 20 unabhängig von der Brennstoffmenge der Pilotbrenner der ersten Gruppe 18 regelbar und in Abhängigkeit der Last wird eine optimale Menge eingestellt. In Summe bleibt dabei die Gesamtmenge an Brennstoff im Hilfssystem 24 konstant.

Über das gezeigte zweite Subsystem 28 können die Brenner 2 sowohl als Brenner der zweiten Gruppe 20 als auch der dritten Gruppe 22 betrieben werden, d.h. über das zweite Subsystem 28 kann die Brennstoffzufuhr sowohl zu den Hauptbrennern als auch zu den Pilotbrennern dieser Gruppe unterbrochen werden.

Die steuerbaren Armaturen des Verbrennungssystems 25 werden von einer Steuerung 74 angesteuert, die symbolisch in FIG 4 dargestellt ist. Die Steuerung 74 ist insbesondere Teil des Verbrennungssystems 25.

## Patentansprüche

1. Verfahren zum Betreiben einer Brenneranordnung (16) einer Wärmekraftmaschine, insbesondere einer Gasturbine, mit mehreren Brennern (2), umfassend jeweils mindestens einen Pilotbrenner (6) und mindestens einen Hauptbrenner (8), wobei ausgehend von einem voreingestellten Betrieb der Wärmekraftmaschine lastabhängig:
- die Gesamtmenge an Brennstoff zu den Brennern (2) im Wesentlichen konstant gehalten wird,
- bei einer ersten Gruppe (18) von Brennern (2), je Brenner sowohl der Pilotbrenner (6) als auch der Hauptbrenner (8) mit Brennstoff versorgt werden,
- bei einer zweiten Gruppe (20) von Brennern (2) die Brennstoffversorgung zu den Hauptbrennern (8) unterbrochen wird, wobei die Pilotbrenner (6) weiterhin betrieben werden, und
- die durch die Unterbrechung der Brennstoffversorgung zu den Hauptbrennern (8) der zweiten Gruppe übrige Brennstoffmenge auf die noch aktiven Hauptbrenner (8) der ersten Gruppe (18) umverteilt wird,
**dadurch gekennzeichnet,**
**dass** die Pilotbrenner (6) der Brenner (2) der zweiten Gruppe (20) mit einer kleineren Luftzahl betrieben werden als die Pilotbrenner (6) der ersten Gruppe (18),
wobei bei einer dritten Gruppe (22) von Brennern (2) die Brennstoffversorgung sowohl zu den Hauptbrennern (8) als auch zu den Pilotbrennern (6) unterbrochen wird und die übrige Brennstoffmenge auf die noch aktiven Hauptbrenner (8) der ersten Gruppe (18) umverteilt wird.

2. Verfahren nach Anspruch 1,
wobei maximal 30% der Brenner (2) zu der dritten Gruppe (22) gehören.

3. Verfahren nach Anspruch 1 oder 2,
wobei maximal 40% der Brenner (2) zur zweiten Gruppe (20) gehören.

4. Verfahren nach einem der vorhergehenden Ansprüche,
wobei die Anzahl der Brenner (2) mit zumindest teilweise unterbrochener Brennstoffversorgung variiert wird, insbesondere in Abhängigkeit von der Leistung der Wärmekraftmaschine.

5. Verfahren nach einem der vorhergehenden Ansprüche,
wobei die Hauptbrenner (8) im Vormischbetrieb betrieben werden.

6. Verfahren nach einem der vorhergehenden Ansprüche, welches bei einer Leistungsabgabe unterhalb der Nennleistung der Wärmekraftmaschine angewendet wird.

7. Verfahren nach einem der vorhergehenden Ansprüche,
wobei zwischen einem Brenner (2) der ersten Gruppe (18) und einem Brenner (2) der dritten Gruppe (22) zumindest ein Brenner (2) der zweiten Gruppe (20) angeordnet ist.

## Claims

1. Method for operating a burner arrangement (16) of a heat engine, particularly of a gas turbine, having a plurality of burners (2), each comprising at least one pilot burner (6) and at least one main burner (8), wherein, on the basis of a preset operation of the heat engine, in a load-controlled manner:
- the total quantity of fuel supplied to the burners (2) is maintained substantially constant,
- in a first group (18) of burners (2), in each burner, both the pilot burner (6) and the main burner (8) are supplied with fuel,
- in a second group (20) of burners (2), the fuel supply to the main burners (8) is interrupted, whereas the pilot burners (6) continue to be operated, and
- the quantity of fuel remaining as a result of the interruption in the fuel supply to the main burners (8) of the second group is redistributed to the still active main burners (8) of the first group (18),
**characterized**
**in that** the pilot burners (6) of the burners (2) in the second group (20) are operated with a lower air ratio than the pilot burners (6) in the first group (18),
wherein, in a third group (22) of burners (2), the fuel supply both to the main burners (8) and to the pilot burners (6) is interrupted and the remaining quantity of fuel is redistributed to the still active main burners (8) in the first group (18).

2. Method according to Claim 1,
wherein a maximum of 30% of the burners (2) are included in the third group (22).

3. Method according to Claim 1 or 2,
wherein a maximum of 40% of the burners (2) are included in the second group (20).

4. Method according to one of the preceding claims,
wherein the number of burners (2) with an at least partially interrupted fuel supply is varied, particularly in accordance with the capacity of the heat engine.

5. Method according to one of the preceding claims,
wherein the main burners (8) are operated in premix mode.

6. Method according to one of the preceding claims,
which is applied at a power output which lies below the rated capacity of the heat engine.

7. Method according to one of the preceding claims,
wherein, between a burner (2) in the first group (18) and a burner (2) in the third group (22), at least one burner (2) in the second group (20) is arranged.

## Revendications

1. Procédé pour faire fonctionner un agencement (16) de brûleurs d'un moteur thermique, notamment d'une turbine à gaz, ayant plusieurs brûleurs (2), chacun comprenant au moins un brûleur (6) pilote et au moins un brûleur (8) principal, dans lequel, en partant d'un fonctionnement réglé à l'avance du moteur thermique, en fonction de la charge :
- on maintient sensiblement constante la quantité totale de combustible envoyé aux brûleurs (2),
- pour un premier groupe (18) de brûleurs (2), on alimente en combustible, pour chaque brûleur, tant le brûleur (6) pilote qu'également le brûleur (8) principal,
- pour un deuxième groupe (20) de brûleurs (2), on interrompt l'alimentation en combustible des brûleurs (8) principaux en continuant de faire fonctionner les brûleurs (6) pilotes et
- on redistribue la quantité de combustible restante, par l'interruption de l'alimentation en combustible des brûleurs (8) principaux du deuxième groupe, sur les brûleurs (8) principaux encore actifs du premier groupe (18),
**caractérisé en ce que**
on fait fonctionner les brûleurs (6) pilotes des brûleurs (2) du deuxième groupe (20) à un indice d'air plus petit que les brûleurs (6) pilotes du premier groupe (18),
dans lequel, pour un troisième groupe (22) de brûleurs (2), on interrompt l'alimentation en combustible, tant des brûleurs (8) principaux qu'également des brûleurs (6) pilotes, et on redistribue la quantité restante de combustible sur les brûleurs (8) principaux encore actifs du premier groupe (18).

2. Procédé suivant la revendication 1,
dans lequel au maximum 30% des brûleurs (2) appartiennent au troisième groupe (22).

3. Procédé suivant la revendication 1 ou 2,
dans lequel au maximum 40% des brûleurs (2) appartiennent au deuxième groupe (20).

4. Procédé suivant l'une des revendications précédentes,
dans lequel on fait varier le nombre des brûleurs (2) ayant une alimentation en combustible interrompue, au moins en partie, notamment en fonction de la puissance du moteur thermique.

5. Procédé suivant l'une des revendications précédentes,
dans lequel on fait fonctionner les brûleurs (8) principaux en fonctionnement en prémélange.

6. Procédé suivant l'une des revendications précédentes,
qui est appliqué à une puissance de sortie en-dessous de la puissance nominale du moteur thermique.

7. Procédé suivant l'une des revendications précédentes,
dans lequel au moins un brûleur (2) du deuxième groupe (20) est disposé entre un brûleur (2) du premier groupe (18) et un brûleur (2) du troisième groupe (22).
